# EUROPÄISCHE PATENTSCHRIFT

(11) **EP 1 438 351 B1**
(45) Veröffentlichungstag und Bekanntmachung des Hinweises auf die Patenterteilung: **20.12.2006**
(21) Anmeldenummer: 02801911.5
(22) Anmeldetag: 24.10.2002
(51) Int. Cl.: C08J 11/08

(54) **RECYCLING VON ABFÄLLEN EXPANDIERTER POLYMERSCHÄUME ZU ERNEUT EXPANDIERBAREN PRODUKTEN**
RECYCLING OF WASTE EXPANDED POLYSTYRENE FOAMS TO GIVE PRODUCTS WHICH MAY BE RE-EXPANDED
RECYCLAGE DE DECHETS DE MOUSSES POLYMERES EXPANSEES EN PRODUITS POUVANT A NOUVEAU ETRE EXPANSES

(30) Priorität: 24.10.2001 DE 10152570; 21.02.2002 DE 10207333
(43) Veröffentlichungstag der Anmeldung: 21.07.2004
(73) Patentinhaber: Fraunhofer-Gesellschaft zur Förderung der angewandten Forschung e.V., 80636 München (DE)
(72) Erfinder: MÄURER, Andreas, 85354 Freising (DE); WOLZ, Gerd, 82319 Starnberg (DE); SCHLUMMER, Martin, 85051 Ingolstadt (DE)
(86) Internationale Anmeldenummer: PCT/EP2002/011921
(87) Internationale Veröffentlichungsnummer: WO 2003/035729

(56) Entgegenhaltungen:
- EP-A- 0 739 930
- WO-A-01/68759
- DE-A- 10 207 336
- PATENT ABSTRACTS OF JAPAN Bd. 1999, Nr. 08, 30. Juni 1999 (1999-06-30) & JP 11 080418 A (HITACHI ZOSEN CORP), 26. März 1999 (1999-03-26)

## Beschreibung

Die vorliegende Erfindung betrifft ein Verfahren zum Herstellen von geschäumtem Polystyrol durch werkstoffliche Verwertung von geschäumten Polystyrol-Abfällen.

Geschäumte Kunststoffe, sog. expandierte Polymerschäume, werden aufgrund ihrer geringen Dichte sowie ihres mechanischen und thermischen Eigenschaftsprofils (insbesondere gutes Isolationsvermögen) vielfach in Verpackungs- und Bauanwendungen eingesetzt. In Anbetracht der sehr großen vermarkteten Mengen und der Vielzahl der etablierten Anwendungen ist expandiertes Polystyrol (EPS) der marktführende Polymerschaum.

Die Verfahren zur Herstellung von EPS und dessen Weiterverarbeitung wurden Ende der 40er Jahre von der Firma BASF entwickelt: Markenname Styropor. Nach Vergabe von Lizenzen und nach Ablauf der Patente sind weitere Rohstoffhersteller und Markennamen hinzugekommen. International hat sich inzwischen der Begriff EPS durchgesetzt.

EPS wird durch Suspensionspolymerisation von Styrol unter Zugabe von Treibmitteln hergestellt und je nach Verwendungszweck zu Typen verschiedener Perlgrößenbereiche aufbereitet. Grundstoff sind neben reinem Polystyrol auch Polystyrol-Mischpolymerisate, insbesondere mit Acrylnitril, die sich durch bessere chemische Beständigkeit auszeichnen. Einpolymerisierte oder nachträglich auf den Perloberflächen fixierte organische Bromverbindungen (meist Hexabromcyclododecan (HBDC), auch Pentabromphenylallylether u.a.) wirken als Flammschutzmittel und ergeben schwerentflammbare oder selbstverlöschende Dämmstoffe (z B der Baustoffklasse B 1 nach DIN 4102). Treibmittel sind niedrigsiedende Kohlenwasserstoffe, vor allem Pentan, aber auch Butan, Propan und andere sowie Mischungen daraus, die in Mengen von 4-7% in EPS enthalten sind. Weiterhin können auch Alkohole oder Wasser als Treibmittel dienen (siehe z.B. 198 13 108 A1)..

In geringem Umfang wird EPS durch nachträgliches Imprägnieren von Polystyrol mit Treibmitteln in Druckbehältern oder auch in Extrudern hergestellt.

### Die Abfallentsorgung der großvolumigen Teile ist problematisch:

Ein hochwertiges werkstoffliches 'Closed-loop'-Recycling von EPS-Abfällen ist derzeit nicht möglich:

Zur Entsorgung von EPS-Abfällen bestehen in Deutschland über 1500 Sammelstellen. Neben der Deponierung und energetischen Nutzung erfolgt eine stoffliche Verwertung von gebrauchtem EPS im Bauwesen. Gemahlenes Styropor dient als Zuschlagstoff für Leichtbeton, Dämmputze und Leichtputze sowie in der Tonindustrie (Poroton) oder es erfolgt die Verwertung als Bodenverbesserer.

Die werkstoffliche Verwertung durch Aufschmelzen, Verdichten und Granulieren von sauberen, sortenreinen EPS-Abfällen führt zu verarbeitbaren Polystyrol-Granulaten mit niedriger Molekularmasse, die nach Beimischung elastifizierender Komponenten bei der Herstellung von Polystyrol-Spritzguß- oder Extrusionsprodukten eingesetzt werden können. Diese Anwendungen sind jedoch empfindlich hinsichtlich Verschmutzung und Fremdpolymergehalt, da bereits ein geringer Anteil von Polyolefinen (aus Sammlung von Verpackungsabfällen oder Folienreste der EPS-Bauplattenverpackung) die Werkstoffqualität der Spritzgußteile negativ beeinflusst.

Prinzipiell könnte aus den o.g. Polystyrol-Granulaten auf Direktbegasungsanlagen die Herstellung neuer Schaumstoffe erfolgen, wenn sich der thermisch-mechanisch bedingte Molekulargewichtsabbau vermeiden ließe. Vgl. Mackey, GA; Westphal, RC; Coughanour, R: Polystyrene (PS). In: Ehrig RJ (Ed.): Plastic Recycling. Carl Hanser Verlag, München, 1992. S. 109ff. die folgenden Abbau beim Recycling zweier unterschiedlicher EPS-Abfallqualitäten dokumentieren:

| Mw [g/mol] | Abfall | verdichtet | verdichtet und granuliert |
|---|---|---|---|
| Becher-EPS | 292.000 | 273.000 | 203.000 |
| Verpackungs-EPS | 222.000 | 195.000 | 166.000 |

Vollständigkeitshalber: Absolut sortenreine und saubere Produktionsabfälle können nach Zerkleinerung als mindergeschäumte 'Füllstoffe' in der Dämmstoffproduktion mit vorgeschäumter Neuware vermischt und so unter Inkaufnahme von geringen Qualitätseinbußen begrenzt bei der Block- und Formteilherstellung mit eingesetzt werden.

Der EP 739 930 A1 liegt die Aufgabe zugrunde, ein Lösungsmittel bereitzustellen, in dem sich geschäumtes Polystyrol löst, um dessen Volumen zu verringern. Lösemittel für Polystyrol waren auch bereits früher bekannt, doch sind diese als Gefahrstoffe einzuordnen, da es sich bei ihnen entweder um aromatische Lösemittel (siehe z.B. US 5,278,282) oder halogenierte Lösemittel (siehe z.B. US 4,517,312 oder US 5,891,403) handelt. Gemäß EP 739 930 A1 kann das Polystyrol durch Wasserzugabe aus dem Lösungsmittel wieder ausgefällt werden.

Aufgabe der vorliegenden Erfindung ist es dagegen, ein Verfahren bereitzustellen, mit dessen Hilfe das geschäumte Polystyrol nicht mehr deponiert, verbrannt oder einer minderwertigen Zweitverwendung zugeführt werden muß, sondern erneut in den Stoffkreislauf hochwertigen Polystyrolschaums eingespeist werden kann.

Diese Aufgabe wird durch Auflösen der geschäumten EPS-Abfälle in einem geeigneten Lösungsmittel und Fällen von Polystyrol mit Hilfe eines Fällmittels gelöst, das ein unmittelbares Wiederaufschäumen des gefällten Polystyrols erlaubt.

Die mit der Erfindung eingesetzte Verfahrens- und Apparatetechnik bei der Fällung ermöglicht es, daß unter Erhalt der Molekülstruktur und des Molekulargewichtes erneut expandierbare Polystyrol-Partikel mit definierter Korngröße und definiertem Expansionsvolumen erhalten werden, die anschließend wie Neuware verarbeitet werden können.

Das Verfahren besteht aus mindestens zwei, vorzugsweise drei Schritten: Auflösen des Kunststoffes, Fällung mit einem geeigneten Fällmittel und ggf. anschließender Teiltrocknung der gefällten Polymerpartikel. Ggf. kann in einem zwischengeschalteten Reinigungsschritt durch selektive Extraktion oder andere physikalische Verfahren (z.B. Filtration) die Polymerreinheit und damit die Qualität des Recyclates erhöht werden.

Dabei besteht das Fällmittel aus dem EPS-Treibmittel oder einem Gemisch davon und das Lösungsmittel löst:
EPS-Abfälle,
Fremdpolymere nicht und
verliert bei Vermischen mit dem Fällmittel die Löseeigenschaften für PS.

Der am gefällten PS-Partikel anhaftende und eingeschlossen Treibmittelgehalt wird vorzugsweise durch die Teiltrocknung in Relation zum angestrebten Expansionsvolumen angepasst.

Verbesserungen und Vorteile gegenüber dem Stand der Technik

Die Verarbeitung des Recyclates zu erneut expandiertem EPS kann nach dem Stand der Technik auf den selben Anlagen erfolgen. Eine Vermischung mit Perl-EPS und anschließendes Vorschäumen und Ausformen mit Dampf ist möglich.

Der restliche Treibmittelgehalt im EPS-Abfall wird ebenso wie das PS im werkstofflichen Recycling-Kreislauf gehalten. Es gelingt die Aufarbeitung fremdpolymerhaltiger EPS-Chargen zu hochwertigen Produkten. Es findet keine thermisch-mechanische Belastung des Polystyrols statt, und damit auch keine Materialschädigung und kein Molekulargewichtsabbau. Die originären Produkteigenschaften werden vom Recyclat erreicht.

Als Lösemittel für das EPS wird vorzugsweise ein Lösemittel oder Lösemittelgemisch eingesetzt, wie es in der EP 739 930 A2 beschrieben ist, oder ein ähnliches Lösemittel(gemisch), so vor allem ein Glykolether, vorzugsweise ein Di-niederalkylenglycoldi-niederalkyl-ether mit Niederalkyl(en) gleich geradkettiges oder verzweigtes C₁-C₁₂-Alkyl (en), vorzugsweise gleich C₁-C₄-Alkyl(en) und stärker bevorzugt ein Diethylen- oder Dipropylenglycol-di-niederalkyl-ether mit C₁-C₄-Alkylgruppen, oder ein Mono- oder Dicarbonsäure-di-niederalkyl-ester mit einer geraden oder verzweigten Carbonsäurekettenlänge von C₁ bis C₁₂, vozugsweise von C₁ bis C₄, worin der Ausdruck "Niederalkyl" die gleiche Bedeutung wie voranstehend für den Glykolether beschrieben besitzt. Es können auch Gemische von Glykolethern, von Monocarbonsäurealkylestern, von Dicarbonsäurealkylestern oder von Ethern mit Estern eingesetzt werden. Gut geeignet als Glykolether sind Dipropylenglykolmethyl- oder -ethylether, Diethylenglykolmethyl- oder -ethylether. Gut geeignet als Carbonsäureester sind Dicarbonsäuremethyl-, -ethyl- und -isobutylester und hier insbesondere Glutarsäuredimethylester, Bernsteinsäuredimethylester und Adipinsäuredimethylester sowie deren Ethyl- und Isobutyl-Analoga, sowie Ethylacetat. Vor allem die oben genannten Dicarbonsäureester, insbesondere die drei namentlich genannten Dicarbonsäureester, können auch in Mischung mit Propylencarbonat, Ethylencarbonat oder Rapsölmethylester eingesetzt werden. Ggf. kann auch Tetrahydrofuran, allein oder in Mischung mit einem oder mehreren der vorgenannten Verbindungen, verwendet werden. Anstelle von Tetrahydrofuran kann auch ein Keton wie Aceton oder eine Mischung von einem Keton wie Aceton und Cyclohexan verwendet werden, wobei bei den Mengenverhältnissen darauf zu achten ist, dass die Polarität der Mischung nicht zu niedrig ist.

Als Fäll- bzw. Treibmittel eignen sich vorzugsweise niedersiedende Alkane wie Pentan. Alternativ können aber auch andere Fällmittel eingesetzt werden, vorausgesetzt, ihre Polarität ist geringer als diejenige des verwendeten Lösungsmittels (bezüglich der Bewertung der Polarität sei auf den Polaritätsindex nach Snyder verwiesen, siehe z.B. "Analytische Chemie" von Matthias Otto, VCH Weinheim, 1995).

In einer Ausgestaltung der Erfindung erfolgt die Fällung des Polystyrols dadurch, dass das Fällmittel zu der Lösung des Polystyrols gegeben, z.B. in eine gerührte Lösung des EPS in einem der genannten Lösemittel eingegossen wird, wobei es besonders günstig ist, die Turbulenzen so zu halten, dass sich nicht zu feinteilige Partikel bilden, sondern Teilchen, die in der Lage sind, eine ausreichende Menge an Fäll- bzw. Treibmittel zu inkorporieren. Dabei entstehen häufig faserförmige Partikel.

In einer weiteren Ausgestaltung der Erfindung wird das Fällmittel vorgelegt, und die Polystyrol-Lösung wird, wieder vorzugsweise unter mehr oder weniger starkem Rühren, zugegeben. Je höher die eingetragene Scherenergie ist, desto kleinere Partikel fallen aus.

In einer dritten Ausgestaltung der Erfindung wird das Polystyrol in einem geeigneten Lösungsmittel der oben genannten Art gelöst und mit einem weniger polaren Lösungsmittel zusammengegeben, das mit der Polystyrol-Lösung keine homogene Phase ausbildet. Beispielsweise wird als weniger polares Lösungsmittel ein solches eingesetzt, das ein Fäll- und Treibmittel für Polystyrol ist, und zwar in einer solchen Menge, dass noch keine Fällung erfolgt. Vorzusgweise erfolgt das Zusammengeben der Polystyrol-Lösung mit dem genannten weniger polaren Lösungsmittel unter kräftigem Rühren, so dass sich eine Emulsion mit einer großen Grenzfläche zwischen disperser Phase und Matrix bildet. Diese Ausgestaltung der Erfindung ist besonders günstig, wenn das einzusetzende Polystyrol ein verschmutztes oder mit Additiven wie z.B. Flammschutzmitteln versehenes Material ist. Die Verschmutzungen oder Flammschutzmittel geben dabei in der Regel in die weniger polare Matrix-Phase über, so dass die Polystyrol-Lösung eine selektive Abreicherung dieser Verunreinigungen erfährt. Läßt man die Emulsion für einige Zeit bestehen, wird der Extraktionseffekt noch verbessert, weil noch in der dispersen Phase verbliebene Verunreinigungen über die Phasengrenzflächen in die kontinuierliche Phase diffundieren können. Die Emulsion wird sodann mit (weiterem) Fällmittel in einer solchen Menge zusammengeben, dass das Polystyrol ausfällt.

Das ausgefällte Polystyrol kann in allen vorgenannten Ausgestaltungen sodann ggf. teilweise getrocknet werden, wobei aber darauf zu achten ist, dass eine genügend große Menge an Fällmittel in den gefällten Partikeln verbleibt, um ein geeignetes Maß an Wiederaufschäumung zu erzielen. Anschließend kann es in geeigneter Weise wiederaufgeschäumt werden, z.B. durch In-Kontakt-Bringen mit einem Wärmeträger wie Wasserdampf.

In einer vierten Ausgestaltung der Erfindung wird das Polystyrol in einem einzigen Schritt gefällt und wiederaufgeschäumt. Hierfür wird der Polystyrol-Lösung ein Fäll- und Treibmittel zusgesetzt, das mit der Polystyrol-Lösung keine homogene Mischphase ausbildet, und zwar in einer Menge, bei der das Polystyrol noch nicht ausfällt, wie oben bei der Beschreibung der dritten Ausgestaltung erläutert. Anschließend wird der erhaltenen Emulsion ein Wärmeträger zugesetzt, z.B. heißes Wasser oder Öl. Durch die eingetragene Wärme erfolgen die Fällung und die Expansion des Polystyrols durch das Fäll- und Treibmittel gleichzeitig.

Besonders gut geeignete Kombinationen von Lösungsmitteln und Fäll-/Treibmitteln für das Polystyrol sind die folgenden:
C₁-C₄-Monocarbonsäureester niediger Alkohole wie Methanol oder Ethanol, insbesondere Ethylacetat, oder Aceton, oder Mischungen hiervon, und Alkane, insbesondere Pentan und/oder Hexan,
C₄-C₆-Dicarbonsäureester, insbesondere Glutarsäureester, Bernsteinsäureester oder Adipinsäureester niedriger Alkohole wie Methanol oder Ethanol oder Mischungen dieser Ester und Alkane, insbesondere Pentan und/oder Hexan,
ein Glycolether aus der oben genannten Gruppe, insbesondere Dipropylenglycolmethylether, oder THF, oder eine Mischung dieser Substanzen, ggf. in Mischung mit einem oder mehreren der vorgenannten Dicarbonsäureester, und Alkane, insbesondere Pentan und/oder Hexan,
ein Glycolether aus der oben genannten Gruppe, insbesondere Dipropylenglycolmethylether, oder THF, oder eine Mischung dieser Substanzen, in Mischung mit einem oder mehreren der vorgenannten Monocarbonsäureester, und Alkane, insbesondere Pentan und/oder Hexan,
C₁-C₄-Monocarbonsäureester niediger Alkohole wie Methanol oder Ethanol, insbesondere Ethylacetat, oder Aceton, oder eine Mischung dieser Substanzen, jeweils in Mischung mit Cyclohexan, und Alkane, insbesondere Pentan und/oder Hexan.
C₄-C₆-Dicarbonsäureester niediger Alkohole wie Methanol oder Ethanol, jeweils in Mischung mit Cyclohexan, und Alkane, insbesondere Pentan und/oder Hexan.

In allen Ausgestaltungen der Erfindung ist es bevorzugt, die Vermischung von Polystyrol-Lösung und Fäll-/Treibmittel unter ausreichendem Eintrag an Scherenergie oder anderer, Turbulenz bewirkender Energie zu bewirken. Dabei gilt ganz allgemein: Je höher der Energieeintrag, desto kleiner sind die ausgefällten, das Treibmittel enthaltenden Teilchen. Die ausgefällten Teilchen haben vorzugsweise einen Durchmesser im Bereich von 10 µm bis zu 2 mm. Häufig entstehen fadenartige Gebilde.

Nachstehend soll die Erfindung anhand von Ausführungsbeispielen näher erläutert werden.

### Beispiel 1

Im 500 ml Becherglas wurden 10 g EPS-Abfall in 300 ml Ethylacetat unter Rühren gelöst (Lösezeit: 1 Minute). Die anschließende Fällung in 500 ml Pentan erfolgte durch Eingießen in die Vorlage, die mit einem Magnetrührer bei etwa 700 Upm gerührt wird, und zwar mit einer Geschwindigkeit von etwa 100 ml/min. Durch die Turbulenzen bildeten sich faserige Partikel als Fällprodukt. Das gefällte Produkt enthielt Pentan. Es wurde im Heißluftofen bei 100°C erneut aufgeschäumt.

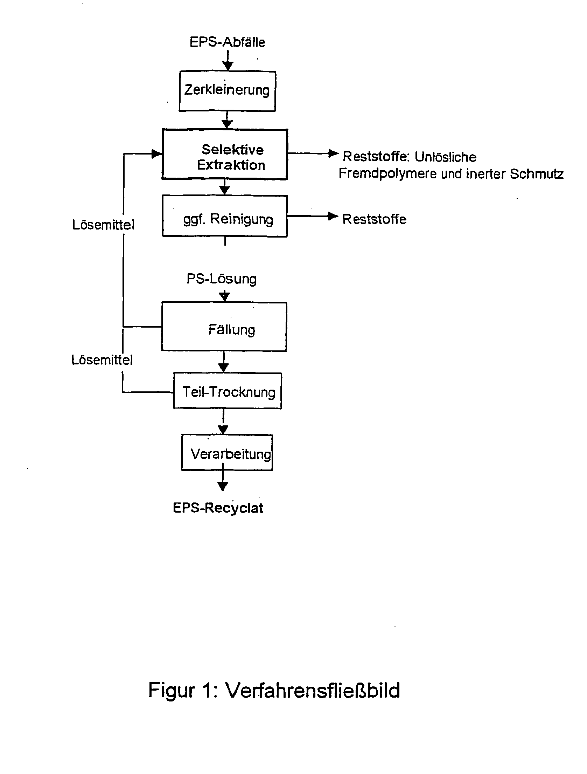

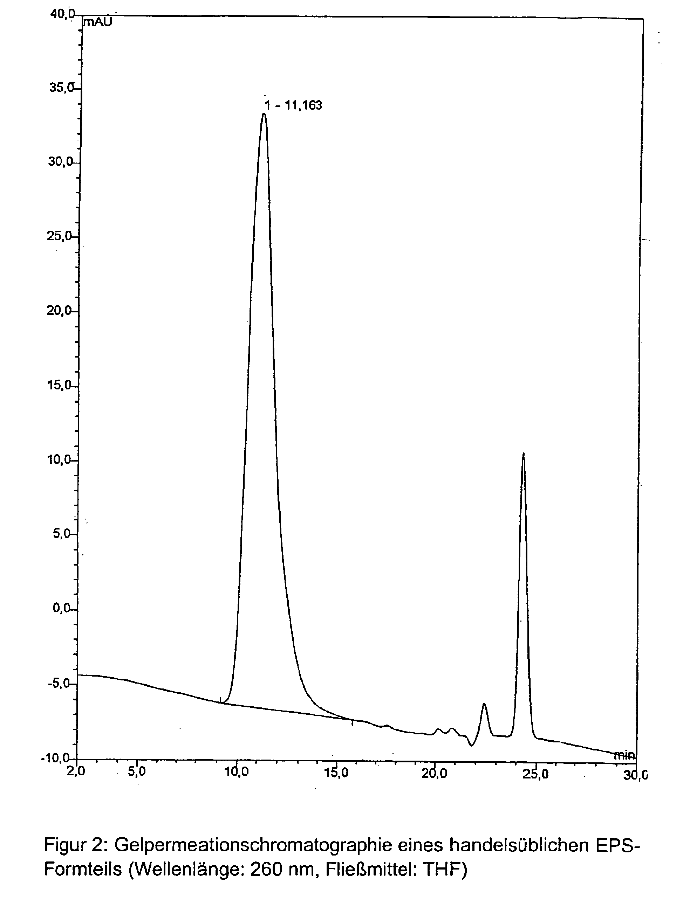

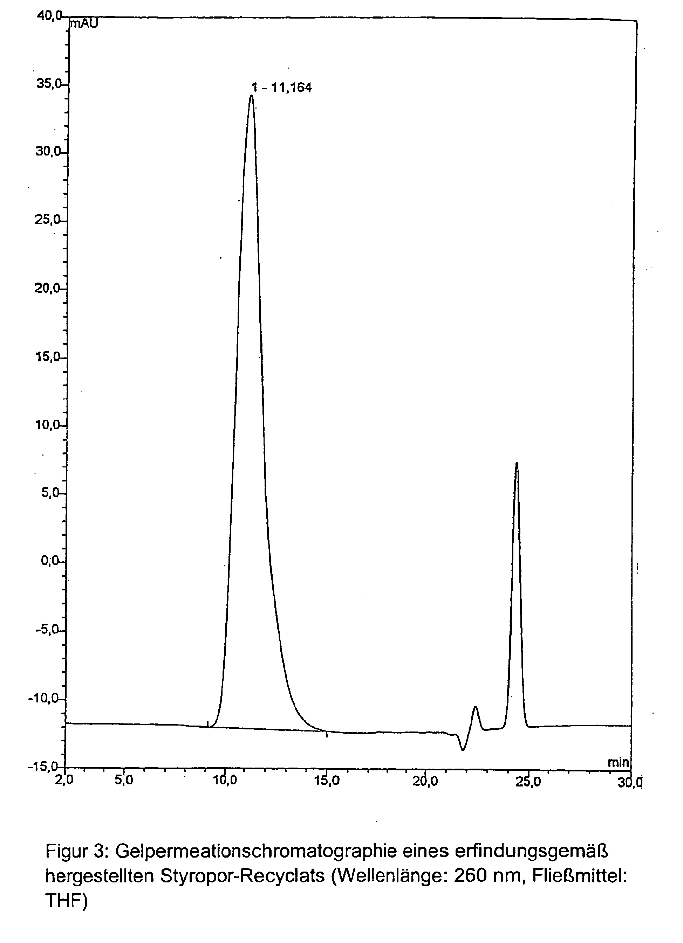

Die Gelpermeationschromatographie von EPS-Formteilen (Figur 2) und daraus nach o.g. Verfahren hergestellten EPS-Recyclat (Figur 3) bestätigt die fast identische Molekularmassenverteilung. Die mittlere Molmasse beträgt für beide Proben Mw 287.000 g/mol und die Polydispersivität des Recyclates verringert sich sogar von 2,81 auf 2,55, was auf eine leichte Qualitätsverbesserung des PS durch die selektive Fällung hinweist. In jedem Fall belegt dieses Ergebnis, dass die Polymerketten durch den Recyclingprozess nicht geschädigt werden und die originäre Materialqualität zumindest erhalten bleibt.

### Beispiel 2

10 g EPS (Dichte 0,02 kg/1) werden in 115 g eines Gemischs aus Aceton und Cyclohexan (65/35% w/w) gelöst und unter turbulenter Vermischung in 100 g n-Hexan emulgiert.

Die Emulsion wird in 350 g n-Hexan turbulent gefällt, und die entstandenen Partikel werden über einen Filter oder ein feines Sieb abgetrennt.

Die Partikel lassen sich ohne weiteres mit Wasserdampf als Wärmeträger nach dem Stand der Technik expandieren.

### Beispiel 3

10 g EPS (Dichte 0,02 kg/l) werden in 100 g einer Mischung aus 70 Gew.-% Tetrahydrofuran (THF) und 30 Gew.-% eines Gemischs aus 5,0-6,5 Gew.-Teilen Glutarsäuredimethylester, 1,2-2,5 Gew.-Teilen Bernsteinsäuredimethylester und 0,8-2,5 Gew.-Teilen Adipinsäuredimethylester sowie ggf. ca. 0,5-1 Gew.-Teilen Dipropylenglycolmethylether gelöst und unter turbulenter Vermischung in 100 g n-Hexan emulgiert.

Die Emulsion wird in 350 g n-Hexan turbulent gefällt. Dabei bilden sich je nach eingetragener Scherenergie feinteiligere bis grobe, fadenförmige Partikel. Bei einer Scherung mit etwa 400-500 U/min in einem Becherglas erhält man Partikel mit bis zu 1 mm Durchmesser und bis zu 1 cm Länge, die über einen Filter oder ein feines Sieb abgetrennt werden. Die Partikel werden anschließend in einen Mischer überführt, wobei sich durch den Mischprozess in etwa sphärische Teilchen mit Durchmessern von bis zu 2 mm ausbilden.

Die Partikel lassen sich ohne weiteres mit Wasserdampf als Wärmeträger oder im Heißluftofen zu Schaumteilchen mit Durchmessern von bis zu etwa 1 cm expandieren.

### Beispiel 4

10 g EPS (Dichte 0,02 g/1) werden in 115 g eines Gemischs aus Aceton/Cyclohexan (65/35 % w/w) gelöst und unter turbulenter Vermischung in 100 g n-Hexan emulgiert.

Die Emulsion wird in 500 g siedendes Wasser oder Öl von ca. 100°C turbulent eingerührt. Dabei werden die emulgierten Tröpfchen gefällt, und die entstehenden Partikel expandieren. Die reexpandierten PS-Recyclate schwimmen auf und werden abgetrennt.

Die Partikelgröße der erhaltenen Teilchen kann eingestellt werden, indem die eingetragene Scherenergie (Turbulenz und Vermischung), die Viskosität (Polymergehalt der Lösung/Emulsion), die Wasser-/Öl-Temperatur und/oder die Geschwindigkeit der Zugabe in geeigneter Weise variiert werden. Es können ggf. einzelne expandierte PS-Kügelchen oder aggregierte Partikel erhalten werden, die als loose-fill Verpackungsmaterial eingesetzt werden können.

## Patentansprüche

1. Verfahren zum Herstellen von wiederaufschäumbarem Polystyrol durch werkstoffliche Verwertung von geschäumten Polystyrol-Abfällen, **gekennzeichnet durch** die folgenden Schritte:
(a) Lösen der geschäumten Polystyrol-Abfälle in einem Lösungsmittel, ausgewählt unter Di-niederalkylenglycoldi-niederalkyl-ethern mit Niederalkyl(en) gleich geradkettiges oder verzweigtes C₁-C₁₂-Alkyl(en), Mono- oder Dicarbonsäure-di-niederalkyl-estern mit einer geraden oder verzweigten Carbonsäurekettenlänge von C₁ bis C₁₂, worin der Ausdruck "Niederalkyl" die gleiche Bedeutung wie voranstehend für die Glykolether beschrieben besitzt, THF, Ketonen, Mischungen der vorgenannten Lösemittel und Mischungen dieser Lösemittel mit Ethylencarbonat, Propylencarbonat, Cyclohexan und/oder Rapsölmethylester, und
(b) Fällen des gelösten Polystyrols mit Hilfe eines Fällmittels, dessen Polarität geringer als die des verwendeten Lösungsmittels ist und das gleichzeitig ein Treibmittel für geschäumtes Polystyrol ist.

2. Verfahren nach Anspruch 1, **dadurch gekennzeichnet, dass** das Fällmittel der Polystyrol-Lösung zugesetzt wird.

3. Verfahren nach Anspruch 1, **dadurch gekennzeichnet, dass** die Polystyrol-Lösung in das Fällmittel eingebracht wird.

4. Verfahren nach einem der voranstehenden Ansprüche, **dadurch gekennzeichnet, dass** der Fällung des Polystyrols ein Reinigungsschritt vorausgeht.

5. Verfahren nach einem der voranstehenden Ansprüche, **dadurch gekennzeichnet, dass** der Reinigungsschritt eine selektive Extraktion ist oder umfaßt.

6. Verfahren nach Anspruch 1, **dadurch gekennzeichnet, dass** der Polystyrol-Lösung ein weniger polares Lösungsmittel zugesetzt wird, das mit dieser Lösung keine homogene Phase ausbildet, und zwar in einer Menge, die nicht ausreichend ist, um ggf. eine Fällung des Polystyrols zu bewirken, und die hierbei gebildete Emulsion anschließend mit dem genannten Fällmittel vermischt wird.

7. Verfahren nach Anspruch 6, **dadurch gekennzeichnet, dass** das weniger polare Lösungsmittel und das Fällmittel identisch sind.

8. Verfahren nach einem der voranstehenden Ansprüche, **dadurch gekennzeichnet, dass** anschließend an die Fällung des Polystyrols dieses teilweise getrocknet wird, derart, dass in das Polystyrol inkorporiertes Treibmittel nicht oder nur teilweise entfernt wird.

9. Verfahren nach einem voranstehenden Ansprüche, **dadurch gekennzeichnet, dass** das gefällte Polystyrol anschließend durch In-Kontakt-Bringen mit einem Wärmeträger wieder aufgeschäumt wird.

10. Verfahren nach Anspruch 1, **dadurch gekennzeichnet, dass** der Polystyrol-Lösung ein Fäll- und Treibmittel für Polystyrol zugesetzt wird, das mit dieser Lösung keine homogene Phase ausbildet, und zwar in einer Menge, die nicht ausreichend ist, um eine Fällung zu bewirken, und die hierbei gebildete Emulsion anschließend mit einem Wärmeträger in Kontakt gebracht wird, wodurch die Fällung des Polystyrols unter dessen gleichzeitiger Expansion erfolgt.

11. Verfahren nach einem der voranstehenden Ansprüche, **dadurch gekennzeichnet, dass** das Lösungsmittel ausgewählt ist unter C₁-C₄-Monocarbonsäuremethyl- oder ethylestern, Mischungen dieser Ester, C₄-C₆-Dicarbonsäuremethyl- oder ethylestern, Mischungen dieser Ester, Dipropylenglycolmethylether, THF, Ethylacetat und Aceton sowie Mischungen der vorgenannten Verbindungen.

12. Verfahren nach Anspruch 11, **dadurch gekennzeichnet, daß** das Lösungsmittel weiterhin Cyclohexan in einem Anteil von unter 50 Vol.-% enthält.

13. Verfahren nach einem der voranstehenden Ansprüche, insbesondere nach Anspruch 11 oder 12, **dadurch gekennzeichnet, dass** das Fällmittel ein Alkan ist.

14. Verfahren nach Anspruch 13, **dadurch gekennzeichnet, dass** das Fällmittel Pentan, Hexan oder eine Mischung aus beiden ist.

## Claims

1. Method for producing re-expandable polystyrene by material reprocessing of expanded polystyrene waste, **characterised by** the following steps:
(a) dissolving the expanded polystyrene waste in a solvent, selected from di-low-alkylene glycol-di-low-alkyl ethers with low-alkyl(ene) like straight-chain or branched C₁-C₁₂ alkyl(ene), mono- or dicarboxylic acid-di-low-alkyl esters with a straight or branched carboxylic acid chain length of C₁ to C₁₂, wherein the term "low-alkyl" has the same meaning as described previously for the glycol ethers, THF, ketones, mixtures of the above-mentioned solvents and mixtures of these solvents with ethylene carbonate, propylene carbonate, cyclohexane and/or rapeseed oil methylester, and
(b) precipitating the dissolved polystyrene with the help of a precipitant, the polarity of which is less than that of the solvent used and which simultaneously is a foaming agent for expanded polystyrene.

2. Method according to claim 1, **characterised in that** the precipitant is added to the polystyrene solution.

3. Method according to claim 1, **characterised in that** the polystyrene solution is introduced into the precipitant.

4. Method according to one of the preceding claims, **characterised in that** a cleaning step precedes the precipitation of the polystyrene.

5. Method according to one of the preceding claims, **characterised in that** the cleaning step is or comprises a selective extraction.

6. Method according to claim 1, **characterised in that** a less polar solvent is added to the polystyrene solution, said solvent not forming a homogeneous phase with this solution, and in fact in a quantity which is insufficient to effect possibly precipitation of the polystyrene, and the hereby formed emulsion is subsequently mixed with the mentioned precipitant.

7. Method according to claim 6, **characterised in that** the less polar solvent and the precipitant are identical.

8. Method according to one of the preceding claims, **characterised in that**, subsequent to the precipitation of the polystyrene, the latter is partially dried in such a manner that foaming agent incorporated into the polystyrene is not removed or only partially.

9. Method according to one of the preceding claims, **characterised in that** the precipitated polystyrene is re-expanded subsequently by being brought into contact with a heat transfer medium.

10. Method according to claim 1, **characterised in that** a precipitant and foaming agent for polystyrene is added to the polystyrene solution, said precipitant and foaming agent not forming a homogeneous phase with this solution, and in fact in a quantity which is insufficient to effect precipitation, and the hereby formed emulsion is subsequently brought into contact with a heat transfer medium, as a result of which the precipitation of the polystyrene is effected with simultaneous expansion thereof.

11. Method according to one of the preceding claims, **characterised in that** the solvent is selected from C₁-C₄ monocarboxylic acid methyl- or ethyl esters, mixtures of these esters, C₄-C₁₆ dicarboxylic acid methyl- or ethyl esters, mixtures of these esters, dipropylene glycol methyl ether, THF, ethyl acetate and acetone and also mixtures of the above-mentioned compounds.

12. Method according to claim 11, **characterised in that** the solvent contains in addition cyclohexane in a proportion of under 50% by volume.

13. Method according to one of the preceding claims, in particular according to claim 11 or 12, **characterised in that** the precipitant is an alkane.

14. Method according to claim 13, **characterised in that** the precipitant is pentane, hexane or a mixture of both.

## Revendications

1. Procédé de production de polystyrène ré-expansible par recyclage matériel de déchets de polystyrène expansé,
**caractérisé par** les étapes suivantes :
(a) dissolution des déchets de polystyrène expansé dans un solvant choisi parmi les di-(alkyl inférieur)-éthers de di-(alkylène inférieur)-glycol, l'expression alkyl(ène) inférieur signifiant alkyl(ène) en C₁ à C₁₂ à chaîne droite ou ramifiée, les di-(alkyl inférieur)-esters d'acide mono- ou dicarboxylique à longueur de chaîne d'acide carboxylique droite ou ramifiée de C₁ à C₁₂, l'expression « alkyl inférieur » ayant la même signification que celle donnée précédemment pour l'éther de glycol, le tétrahydrofuranne, les cétones, des mélanges des solvants nommés, et des mélanges de ces solvants avec des carbonates d'éthylène, de propylène, des cyclohexanes et/ou des esters méthyliques d'huile de colza, et
(b) précipitation du polystyrène dissous, à l'aide d'un précipitant dont la polarité est inférieure à celle du solvant utilisé et qui constitue simultanément un agent moussant pour le polystyrène expansé.

2. Procédé selon la revendication 1,
**caractérisé en ce que**
le précipitant est ajouté à la solution de polystyrène.

3. Procédé selon la revendication 1,
**caractérisé en ce que**
la solution de polystyrène est incorporée au précipitant.

4. Procédé selon l'une quelconque des revendications précédentes,
**caractérisé en ce que**
la précipitation du polystyrène est précédée d'une étape de purification.

5. Procédé selon l'une quelconque des revendications précédentes,
**caractérisé en ce que**
l'étape de purification est ou comprend une extraction sélective.

6. Procédé selon la revendication 1,
**caractérisé en ce qu'**
on ajoute à la solution de polystyrène un solvant de moindre polarité ne formant pas de phase homogène avec cette solution, et ce dans une quantité insuffisante pour entraîner une précipitation éventuelle du polystyrène, et on mélange ensuite l'émulsion ainsi produite au précipitant mentionné.

7. Procédé selon la revendication 6,
**caractérisé en ce que**
le solvant de moindre polarité et le précipitant sont identiques.

8. Procédé selon l'une quelconque des revendications précédentes,
**caractérisé en ce qu'**
on sèche partiellement le polystyrène après sa précipitation, de telle sorte que l'agent moussant incorporé dans le polystyrène ne soit pas, ou seulement partiellement, éliminé.

9. Procédé selon l'une quelconque des revendications précédentes,
**caractérisé en ce qu'**
on procède ensuite à une ré-expansion du polystyrène précipité par mise en contact avec un vecteur thermique.

10. Procédé selon la revendication 1,
**caractérisé en ce qu'**
on ajoute à la solution de polystyrène un précipitant et un agent moussant pour le polystyrène ne formant pas de phase homogène avec cette solution, et ce dans une quantité insuffisante pour entraîner une précipitation, et on met en contact l'émulsion ainsi formée avec un vecteur thermique de manière à provoquer la précipitation du polystyrène en même temps que son expansion.

11. Procédé selon l'une quelconque des revendications précédentes,
**caractérisé en ce que**
le solvant est choisi parmi les esters éthyliques ou méthyliques d'acide monocarboxylique en C₁ à C₄, les mélanges de ces esters, les esters éthyliques ou méthyliques d'acide dicarboxylique en C₄ à C₆, les mélanges de ces esters, le dipropylèneglycol méthyléther, le tétrahydrofuranne, l'acétate d'éthyle et l'acétone, ainsi que les mélanges des composés cités.

12. Procédé selon la revendication 11,
**caractérisé en ce que**
le solvant contient en outre du cyclohexane dans une proportion inférieure à 50 % en volume.

13. Procédé selon l'une quelconque des revendications précédentes, notamment selon la revendication 11 ou 12,
**caractérisé en ce que**
le précipitant est un alcane.

14. Procédé selon la revendication 13,
**caractérisé en ce que**
le précipitant est le pentane, l'hexane ou un mélange de ceux-ci.
